Europäisches Patentamt

European Patent Office

Office européen des brevets

(19)

(11) EP 0 813 190 B1

(12) **EUROPEAN PATENT SPECIFICATION**

(45) Date of publication and mention
of the grant of the patent:
**20.03.2002 Bulletin 2002/12**

(51) Int Cl.⁷: **G11B 7/085**

(21) Application number: **97114960.4**

(22) Date of filing: **08.10.1992**

(54) **Jump controller for an optical information recording and reproducing apparatus**

Spursprungregler eines optischen Informationsaufzeichnungs- und -wiedergabegeräts

Contrôleur de saut pour un appareil d'enregistrement et de lecture optique d'information

(84) Designated Contracting States:
**DE FR GB**

(30) Priority: **09.10.1991 JP 26228391**
**11.11.1991 JP 29545591**
**29.11.1991 JP 31652191**

(43) Date of publication of application:
**17.12.1997 Bulletin 1997/51**

(62) Document number(s) of the earlier application(s) in
accordance with Art. 76 EPC:
**92117178.1 / 0 536 737**

(73) Proprietor: **NIPPON CONLUX CO., LTD.**
**Chiyoda-ku Tokyo-To (JP)**

(72) Inventors:
• **Onodera, Akira**
**Kawagoe-Shi, Saitama-Ken (JP)**

• **Yamazaki, Koichi**
**Sakado-Shi, Saitama-Ken (JP)**

(74) Representative: **Reichel, Wolfgang, Dipl.-Ing. et al**
**Reichel und Reichel**
**Parkstrasse 13**
**60322 Frankfurt (DE)**

(56) References cited:
**GB-A- 2 081 935**      **US-A- 4 698 795**

• **OPTICAL MASS DATA STORAGE II, SAN DIEGO,
AUGUST 18 - 22, 1986, vol. VOL. 695, no. 1986,
18 August 1986, FREESE R P;DEHAAN M;
JAMBERDINO A A, pages 160-164, XP000010876
THOMAS M: "SAMPLE ACCESS: A SUBSTITUTE
FOR CONTINUOUS TRACK COUNTING"**

**Description**

The present invention relates to a jump controller for an optical information recording and reproducing apparatus for an optical information recording medium wherein information is recorded by forming a pit upon application of a light beam to the recording medium while aligning an optical head to a track position, and information is read from a pit by using the light beam.

For the optical head in a conventional information recording and reproducing apparatus, a means is provided for generating a tracking error signal whose polarity changes between a positive polarity and negative polarity in response to a track traverse by the optical head. A track traverse detecting signal is generated by comparing the tracking error signal with a reference signal. In case of a jump to nearby tracks the optical head is gradually accelerated and decelerated.

The present invention is based on a prior art as disclosed in the US 4 698 795 A reflecting a jump controller as defined in the preamble of claim 1 and the GB 2 081 935 A. Especially, an information recording and reproducing apparatus according to the prior art as discussed in US 4 698 795 A includes a recording medium having a plurality of recording tracks, an optical head having a light source for emitting a light beam towards the surface of said medium, a photodetector for receiving the reflected light, and means for deriving a tracking error signal from the intensity of the reflected light. A tracking control loop for driving the optical head in order to make the tracking error signal zero is provided. Also included is a jump controller for moving the optical head across several tracks of the recording medium in response to a track jump command. When a track jump signal is applied the jump controller opens the tracking control loop and applies an acceleration pulse to the actuator driving the optical head.

While the optical head is moving across the tracks of the optical recording medium a track traverse detecting circuit derives a track traverse detecting signal from the tracking error signal allowing to detect the center of the target recording track. When the target recording track is reached, the track jump controller closes the tracking control loop and applies a deceleration pulse to the actuator. According to the GB 2 081 935 A acceleration and deceleration pulses usually are generated by differentiating means.

As the deceleration pulse is applied at the moment when the moving optical head reaches the center of the target recording track the optical head will move on towards a position slightly spaced apart from the center of the target track. Following, as the tracking control loop is closed at the same time, this will bring back the optical head to the center of the target track by the normal mode of operation of the tracking control loop. But, as an essential drawback the optical head might swing once or even several times around the center of the recording track making the track jump operation unstable and difficult to control.

It is the object of the present invention to provide a jump controller allowing the optical head in an apparatus of the above kind to perform a jump to another track reliable and speedily.

In order to achieve this object, the present invention provides an information recording and reproducing apparatus, having a jump controller, for an optical information recording medium having a plurality of guide tracks for recording and reproducing information to and from the medium by applying a light beam to a target recording track while an optical head traverses a predetermined number of guide tracks and reaches the target recording track, the jump controller comprising:

an objective lens driver, assembled in said optical head, for detecting a light from said medium to produce a track error signal, and a tracking control loop for driving said objective lens in said optical head to move the light beam so as to make the tracking error signal zero,

a responsive circuit for responding to a track jump command when the same is applied, to open said tracking control loop and supply a drive current to said objective lens driver so as to move said optical head from the present recording track to another recording track, and for responding the track traverse detecting signal when the same is applied to supply a damping current which is produced by changing the polarity of the drive current and to close said tracking control loop when the light beam has reached the center of the target recording track,

a conversion circuit for converting the driving current and the damping current to currents which rise rapidly and fall gradually, and

a track traverse detecting circuit for producing a track traverse detecting signal in response to the track error signal, characterized in that said track traverse detecting signal produced by said track traverse detecting circuit is generated by comparing a tracking error signal to a reference signal and modifying the reference signal when equality occurs providing a snapback effect, and

said snapback effect being used for generating a braking signal at a location before the light beam reaches the center of the target recording track.

According to the present invention, an instantaneously (rapidly) rising and gradually falling drive current is supplied to the objective lens driver to move the light beam, and significantly before the light beam reaches the center of the target recording track, the polarity of the drive current is reversed, and a rapidly rising and gradually falling damping current is supplied. The motion of the optical head is decelerated until the light beam reaches the center of the target recording track where the tracking control loop is closed for keeping the light beam on this track. As compared with a conventional gradual acceleration and deceleration, jumping across a number of tracks can be completed in a very short time duration.

In the accompanying drawings:

Fig. 1 is a block diagram showing the circuit arrangement of an embodiment of the present invention;

Fig. 2 is a detailed circuit diagram of the track traverse detector shown in Fig. 1;

Fig. 3(a) and 3(b) are timing charts showing the signal waveforms at various circuit portions shown in Fig. 1.

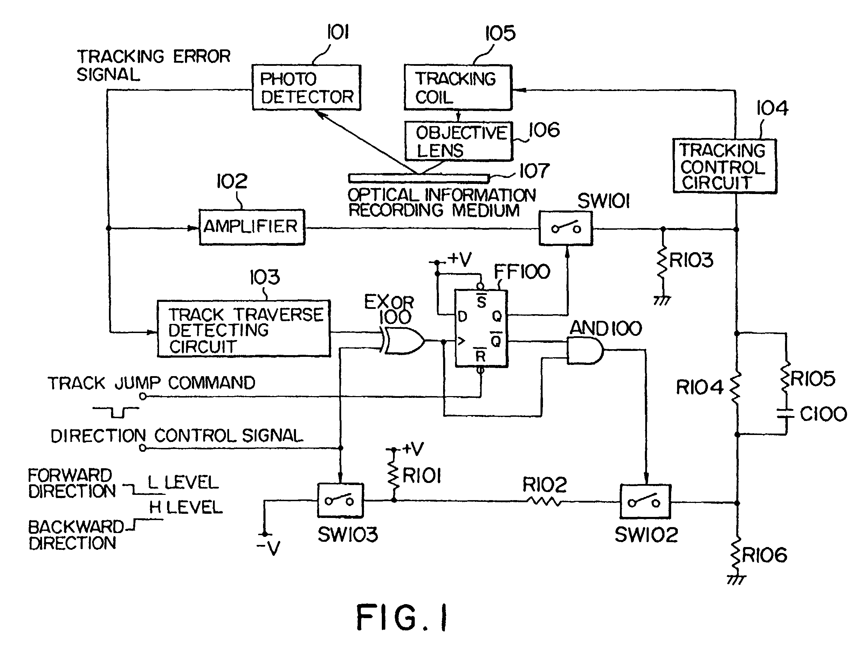

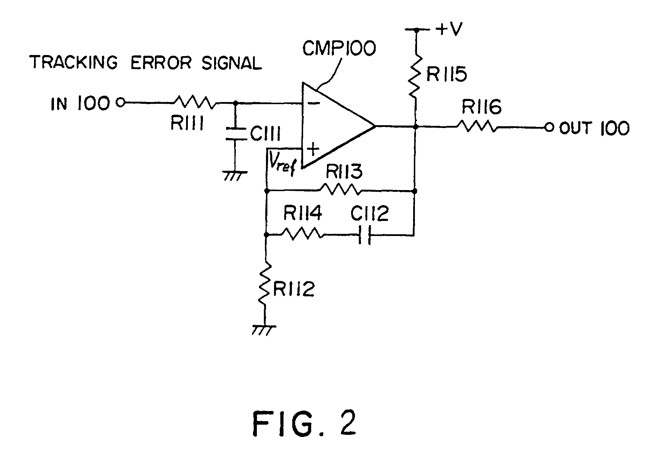

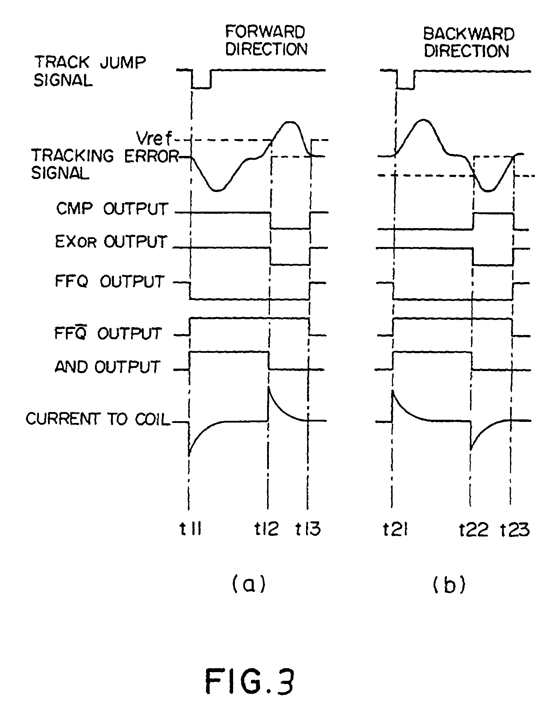

Fig. 1 is a circuit diagram showing the structure of an embodiment of a near jump controller for controlling an optical head to jump to a nearby track according to the present invention. Fig. 2 is a detailed circuit diagram showing the structure of the track traverse detector in the circuit shown in Fig. 2. Fig. 3a and 3b are timing charts showing signal waveforms at various circuit portions shown in Fig.1.

Referring to Fig. 1, reference numeral 107 represents an optical information recording medium. A light beam radiated through an objective lens 106 is focussed on the optical card 107, and the reflected light is applied to an optical detector 101 to form a tracking error signal. This tracking error signal is amplified by an amplifier 102 and supplied via a switch SW101 to a tracking controller 104 to drive a tracking coil 105 for driving the objective lens 106.

The tracking error signal is also supplied to a track traverse detector 103 the details of which will be later described with Fig. 2. The track traverse detector 103 shapes the tracking error signal into a rectangular waveform to generate a track traverse detecting signal.

This track traverse detecting signal is supplied to one input terminal of an exclusive OR EXOR100. Supplied to the other input terminal of EXOR100 is a direction control signal which takes an L level when the objective lens is moved in the forward direction and an H level when it is moved in the backward direction. The direction control signal is also used for opening and closing a switch SW103. For the forward direction, the switch SW103 opens to supply the positive power source voltage +V to the left contact of the switch SW102 as viewed in Fig. 1 via resistors R101 and R102. For the backward direction, the switch SW103 closes to supply the negative power source voltage -V to the left contact of the switch SW102 via the resistor R102.

A signal at the Q output terminal of a flip-flop FF100 is used for opening and closing the switch SW101. This signal of an H level closes the switch SW101 to always maintain the light beam at the center of a track, and the signal of an L level opens the switch SW101. A signal at an inverted $\bar{Q}$ output terminal of the flip-flop FF100 as well as an output from EXOR100 is supplied to an AND gate AND100 whose output is used for opening and closing the switch SW102.

While the switch SW101 opens and the switch SW102 closes, a voltage corresponding to the state of the switch SW103 is supplied to the tracking controller 104 via a conversion circuit made of a parallel circuit of a resistor R104 and a serially connected resistor R105 and capacitor C100. The tracking controller 104 flows a current to the tracking coil 105 to start moving the objective lens 106. When the switch SW102 opens under this condition, the tracking controller 104 receives a voltage signal of an inverted polarity and flows a damping current to the tracking coil 105.

Fig. 2 shows the detailed structure of the track traverse detector 103 shown in Fig. 1. The tracking error signal applied to an input terminal IN100 is supplied to the inverting terminal of a comparator CMP100 via an integrator made of a resistor R111 and capacitor C111. A reference signal Vref is applied to the non-inverting input terminal of the comparator CMP100. The tracking error signal is compared with the reference signal, and the comparison result is outputted via a resistor R116 to an output terminal OUT100. This reference voltage Vref is a voltage divided by a serial circuit made of resistors R115, R113, and R112.

The resistor R113 is a feedback element connected between the non-inverting input terminal and output terminal of the comparator CMP100. The reference voltage Vref changes with an output voltage of the comparator CMP100. As the feedback element of the comparator CMP100, a serial circuit of a resistor R114 and capacitor C112 is also connected to add an offset to an output of the comparator CMP100.

Fig. 3(a) und (b) show signal waveforms at various circuit portions of Fig. 1 during the forward jump and backward jump operations. The operation of the circuit of Fig. 1 will be described with reference to these waveforms shown in Fig. 3(a) and (b).

Forward Direction Jump

In order to determine the motion direction, the direction control signal is set to an L level for the forward direction jump. With the L level signal, the switch SW103 opens, and so the positive voltage is applied via the resistors R101 and R102 to the left contact of the switch SW102. A track jump command of an L level is issued at time $t_{11}$ and supplied to an inverted reset terminal $\bar{R}$ of the flip-flop FF100. Therefore, the Q output of the flip-flop FF100 takes an L level to open the switch SW101 and stop the control of making the light beam follow the center of a track. The inverted $\bar{Q}$ output of the flip-flop FF100 takes an H level to close the switch SW102 and supply a positive voltage to the converter circuit made of the resistors R104, R105 and capacitor C100. Accordingly, a drive current shown in Fig. 3(a) flows in the tracking coil 105 to start moving the objective lens 106 in the forward direction.

As the objective lens 106 moves, the tracking error signal changes from a zero level to a negative level and from the zero level to a positive level. When the tracking error signal becomes larger than the reference value Vref, the track traverse detecting signal takes an L level. Therefore, both the inputs to EXOR100 are L level, and the output is L level. With an L level of the output of EXOR100, the input conditions of the AND gate AND100 are negated. Therefore, the AND gate AND100 supplies an L level signal to the switch SW102 to open it.

Accordingly, the positive voltage having been applied to the conversion circuit disappears at once so that a current in the opposite direction will flow through the tracking coil 105 to provide a fast damping. This damping is carried out at time $t_{12}$ shown in Fig. 3 (a). At time $t_{13}$ when the tracking error signal again takes the zero level (when the light beam reaches the center of the track), the track traverse detecting signal takes an H level. With H and L level inputs, EXOR100 outputs an H level signal. The rising edge of this H level signal is applied to a clock terminal of the flip-flop FF100 so that the Q output of the flip-flop FF100 takes an H level to close the switch SW101 and lock the objective lens 106 at that position. The inverted $\bar{Q}$ output of the flip-flop FF100 takes an L level, and so the input conditions of the AND gate AND100 are negated to supply an L level signal to the switch SW102.

Backward Direction Jump

In order to determine the motion direction, the direction control signal is set to an H level for the backward direction jump. Therefore, the switch SW103 closes, and so the negative voltage -V is applied via the resistor R102 to the left contact of the switch SW102. When the switch SW102 closes, the direction of the current flowing through the tracking coil 105 becomes opposite to that during the forward direction jump. As shown in Fig. 3(b), the tracking error signal changes in the opposite direction to that shown in Fig. 3(a). The operation is similar to that during the forward direction jump except that the input conditions to EXOR100 are reversed.

Claims

1. An information recording and reproducing apparatus, having a jump controller, for an optical information recording medium (107) having a plurality of guide tracks for recording and reproducing information to and from the medium by applying a light beam to a target recording track while an optical head traverses a predetermined number of guide tracks and reaches the target recording track, the jump controller comprising:

an objective lens driver (104, 105), assembled in said optical head, for detecting a light from said medium to produce a track error signal, and a tracking control loop (101, 102, SW101, 104, 105, 106) for driving said objective lens in said optical head to move the light beam so as to make the tracking error signal zero,

a responsive circuit (FF100, AND100, SW101, SW102, SW103) for responding to a track jump command when the same is applied, to open said tracking control loop and supply a drive current to said objective lens driver so as to move said optical head from the present recording track to another recording track, and for responding the track traverse detecting signal when the same is applied to supply a damping current which is produced by changing the polarity of the drive current and to close said tracking control loop when the light beam has reached the center of the target recording track,

a conversion circuit (C100, R104, R105) for converting the driving current and the damping current to currents which rise rapidly and fall gradually, and

a track traverse detecting circuit (103) for producing a track traverse detecting signal in response to the track error signal,

**characterized in that**

said track traverse detecting signal produced by said track traverse detecting circuit (103) is generated by comparing a tracking error signal to a reference signal and modifying the reference signal when equality occurs providing a snapback effect,

and said snapback effect being used for generating a braking signal at a location before the light beam reaches the center of the target recording track.

2. An information recording and reproducing apparatus having a jump controller according to Claim 1, **characterized in that** said track traverse detecting circuit (103) having a comparator (CMP100) associated with a feedback element (R113, R114, C112) which connects the positive input terminal and the output terminal of said comparator, whereby said tracking error signal is applied to the positive input terminal and said reference signal is applied to the negative input through said feedback element.

3. An information recording and reproducing apparatus having a jump controller according to one of Claims 1 and 2,
**characterized in that**
said feedback element consists of a resistor (R113) and a series circuit of a resistor (R114) and a capacitor (C112).

**Patentansprüche**

1. Vorrichtung zum Aufzeichnen und Wiedergeben von Informationen, die einen Spursprungregler aufweist für einen optischen Informations-Aufzeichnungsträger (107) mit einer Vielzahl von Führungsspuren zur Aufzeichnung und Wiedergabe von Informationen auf bzw. von dem Aufzeichnungsträger mittels eines auf eine Ziel-Aufzeichnungsspur gerichteten Lichtstrahls, während ein optischer Kopf eine vorbestimmte Anzahl von Führungsspuren überquert und die Ziel-Aufzeichnungsspur erreicht, wobei der Spursprungregler aufweist:

einen in dem optischen Kopf angeordneten Objektivlinsenantrieb (104, 105) zum Aufnehmen von Licht von dem Aufzeichnungsträger, um ein Spurnachlauf-Fehlersignal zu erzeugen, und einen Spurnachlauf-Regelkreis (101, 102, SW101, 104, 105, 106) für einen derartigen Antrieb der Objektivlinse in dem optischen Kopf, daß der Lichtstrahl so bewegt wird, daß das Spurnachlauf-Fehlersignal null wird,

eine Antwortschaltung (FF100, UND100, SW101, SW102, SW103) zum Antworten auf einen Spursprungbefehl, wenn dieser zugeführt wird, um den Spurnachlauf-Regelkreis zu öffnen und dem Objektivlinsenantrieb einen Antriebstrom zuzuführen, so daß der optische Kopf von der augenblicklichen Aufzeichnungsspur zu einer anderen Aufzeichnungsspur bewegt wird, und zum Antworten auf ein Spurüberquerungsfeststellsignal, wenn dieses zugeführt wird, um einen Dämpfungsstrom abzugeben, der durch Änderung der Polarität des Antriebstroms erzeugt wird, und um den Spurnachlauf-Regelkreis zu schließen, wenn der Lichtstrahl die Mitte der Ziel-Aufzeichnungsspur erreicht hat,

eine Umwandlungsschaltung (C100, R104, R105) zum Umwandeln des Antriebsstroms und des Dämpfungsstroms in Ströme, die rasch ansteigen und allmählich abfallen, und

eine Spurüberquerungs-Feststellschaltung (103) zum Erzeugen des Spurüberquerungs-Feststellsignals in Abhängigkeit von dem Spurnachlauf-Fehlersignal,

**dadurch gekennzeichnet,**
**daß** das von der Spurüberquerungs-Feststellschaltung (103) erzeugte Spurüberquerungs-Feststellsignal durch Vergleichen eines Spurnachlauf-Fehlersignals mit einem Bezugssignal und durch Ändern des Bezugssignals, wenn Gleichheit auftritt, bei der ein Rückschnelleffekt bewirkt wird, erzeugt wird, und der Rückschnelleffekt zum Erzeugen eines Bremssignals an einer Stelle benutzt wird, die vor der Stelle liegt, an der der Lichtstrahl die Mitte der Ziel-Aufzeichnungsspur erreicht.

2. Vorrichtung zum Aufzeichnen und Wiedergeben von Informationen, mit einem Spursprungregler nach Anspruch 1,
**dadurch gekennzeichnet,**
**daß** die Spurüberquerungs-Feststellschaltung (103) einen Komparator (CMP100) aufweist, der mit einem Rückführelement (R113, R114, C112) versehen ist, das den positiven Eingangsanschluß mit dem Ausgangsanschluß des Komparators verbindet, wobei das Spurnachlauf-Fehlersignal dem positiven Eingangsanschluß und das Bezugssignal dem negativen Eingang über das Rückführelement zugeführt wird.

3. Vorrichtung zum Aufzeichnen und Wiedergeben von Informationen mit einem Spursprungregler nach einem der Ansprüche 1 und 2,
**dadurch gekennzeichnet,**
**daß** das Rückführelement aus einem ohmschen Widerstand (R113) und einer Reihenschaltung aus einem ohmschen Widerstand (R114) und einem Kondensator (C112) besteht.

**Revendications**

1. Appareil d'enregistrement et de reproduction d'informations comportant un dispositif de commande de saut destiné à un support d'enregistrement d'information optique (107) ayant une pluralité de pistes de guidage pour l'enregistrement et la reproduction d'informations vers et en provenance du support par application d'un faisceau lumineux à une piste d'enregistrement cible pendant qu'une tête optique franchit un nombre prédéterminé de pistes de guidage et atteint la piste d'enregistrement cible, le dispositif de commande de saut comprenant :

un dispositif de pilotage d'objectif (104, 105), monté dans ladite tête optique, pour détecter une lumière provenant dudit support afin de produire un signal d'erreur de poursuite, et une boucle de commande de poursuite (101, 102, SW101, 104, 105, 106) pour piloter ledit objectif dans ladite tête optique afin de déplacer le faisceau lumineux de manière à rendre nul le signal d'erreur de poursuite,

un circuit de réponse (FF100, AND100, SW101, SW102, SW103) pour répondre à un ordre de saut de piste lorsque celui-ci est appliqué, afin d'ouvrir ladite boucle de commande de poursuite et de délivrer un courant de pilotage audit circuit de pilotage d'objectif de manière à déplacer ladite tête optique de la piste d'enregistrement présente à une autre piste d'enregistrement, et pour répondre au signal de détection de franchissement de piste lorsque ce dernier est appliqué, afin de délivrer un courant d'amortissement qui est produit en modifiant la polarité du courant de pilotage et de fermer ladite boucle de commande de poursuite lorsque le faisceau lumineux a atteint le centre de la piste d'enregistrement cible,

un circuit de conversion (C100, R104, R105) pour convertir le courant de pilotage et le courant d'amortissement en des courants qui croissent rapidement et décroissent progressivement, et

un circuit de détection de franchissement de piste (103) pour produire un signal de détection de franchissement de piste en réponse au signal d'erreur de poursuite,

**caractérisé en ce que**

ledit signal de détection de franchissement de piste produit par ledit circuit de détection de franchissement de piste (103) est généré en comparant un signal d'erreur de poursuite à un signal de référence et en modifiant le signal de référence lorsqu'il se produit une égalité conduisant à un effet de rappel brusque, et

ledit effet de rappel brusque étant utilisé pour générer un signal de freinage en un point situé avant que le faisceau lumineux n'atteigne le centre de la piste d'enregistrement cible.

2. Appareil d'enregistrement et de reproduction d'informations comportant un dispositif de commande de saut selon la revendication 1, **caractérisé en ce que**
ledit circuit de détection de franchissement de piste (103) comporte un comparateur (CMP100) associé à un élément de contre-réaction (R113, R114, C112) qui connecte la borne d'entrée positive et la borne de sortie dudit comparateur, d'où il résulte que ledit signal d'erreur de poursuite est appliqué à la borne d'entrée positive et que ledit signal de référence est appliqué à l'entrée négative par l'intermédiaire dudit élément de contre-réaction.

3. Appareil d'enregistrement et de reproduction d'informations comportant un dispositif de commande de saut selon l'une des revendications 1 et 2, **caractérisé en ce que**
ledit élément de contre-réaction est constitué d'une résistance (R113) et d'un circuit série constitué d'une résistance (R114) et d'un condensateur (C112).

FIG. 1

EP 0 813 190 B1

FIG. 2

FIG.3